# EUROPÄISCHE PATENTSCHRIFT

(11) **EP 2 012 044 B1**
(45) Veröffentlichungstag und Bekanntmachung des Hinweises auf die Patenterteilung: **05.10.2011**
(21) Anmeldenummer: 08016955.0
(22) Anmeldetag: 06.02.1998
(51) Int. Cl.: F16F 15/139

(54) **Mechanischer Torsionsschwingungsdämpfer**
Mechanical torsional vibration damper
Amortisseur mécanique de vibrations de torsion

(30) Priorität: 03.03.1997 DE 19708328
(43) Veröffentlichungstag der Anmeldung: 07.01.2009
(62) Teilanmeldung aus: 03021384.7
(73) Patentinhaber: Rohs-Voigt Patentverwertungsgesellschaft mbH, 52351 Düren (DE)
(72) Erfinder: Rohs, Ulrich, Dr.-Ing., 52351 Düren (DE); Rohs, Hans, Dr.-Ing., 52351 Düren (DE); Heidingsfeld, Dietmar, Dipl.-Ing., 52078 Aachen (DE)
(74) Vertreter: Reuther, Martin

(56) Entgegenhaltungen:
- WO-A-95/17614
- DE-A1- 4 115 654
- DE-A1- 4 418 284
- DE-A1- 4 420 178
- DE-C1- 3 901 467
- GB-A- 828 266
- GB-A- 2 235 963
- SU-A2- 1 270 448
- US-A- 4 068 749
- US-A- 5 370 581
- US-A- 5 496 216

## Beschreibung

Die Erfindung betrifft einen mechanischen Torsionsschwingungsdämpfer.

Im Fahrzeugmotorenbau tritt das Problem auf, dass die vom Motor durch die Zündfolge hervorgerufenen Drehschwingungen in den Abtriebsstrang übertragen werden, insbesondere dann, wenn die Frequenzen den Eigenfrequenzen des Systems nahekommen. Dies ist insbesondere im Leerlauf, aber auch bei Lastwechselsituationen unangenehm.

Um dies zu vermeiden, sind verschiedene Konstruktionen sogenannter mechanischer Torsionsschwingungsdämpfer bekannt, bei denen zwischen einem mit der Kurbelwelle des Motors verbundenen Primärteil und einem mit der Schaltkupplung verbundenen Sekundärteil elastische Dämpfungsmittel in Form von Federn oder hydraulischen Bauteilen angeordnet sind.

Bekannte Systeme haben jedoch den Nachteil, dass sie nur einen Teil des Arbeitsspektrums des Antriebs umfassen, aber im übrigen Lastbereich wirkungslos sind. Das Problem besteht darin, dass für den Lastbereich eine dem übertragenen Drehmoment und der Drehzahl entsprechend hohe Federkraft und Dämpfung erforderlich sind, während im Leerlauf nur geringe Federkräfte und so gut wie keine Dämpfung vorliegen dürfen, um eine Leerlaufentkopplung zu erreichen. Im kritischen Drehzahlbereich, d. h. bei Drehzahlen im Bereich der Eigenfrequenz, ist aber eine sehr hohe Dämpfung erforderlich, da andernfalls deutliche Überhöhungen der Drehbeschleunigungen gegenüber der Primärseite auftreten. Dieser Drehzahlbereich wird vor allem beim Anlassen des Motors, aber auch bei Lastwechselsituationen durchlaufen. Im Resonanzfall können dynamische Momente auftreten, die das Vielfache des Nennmoments betragen.

Zum nicht vorveröffentlichten Stand der Technik zählt die DE 195 44 832, aus der ein mechanischer Torsionsschwingungsdämpfer mit einem Primär- und einem Sekundärteil bekannt ist, die über ein formkraftschlüssiges Federungs- und Dämpfungssystem aus an Berührungsflächen am Primär- und Sekundärteil angreifenden tangentialen Druckfedern und Schubkolben verbunden sind. Diese Kupplung besteht aus einer umlaufenden Antriebsscheibe und einer hierzu koaxialen, gleichsinnig umlaufenden Abtriebsscheibe mit Mitteln zur elastischen Kraftübertragung, wobei die Antriebsscheibe die Abtriebsscheibe teilweise übergreift und an der Innenseite des übergreifenden Teiles über den Umfang verteilte, radiale Taschen aufweist, deren Mantelfläche zu ihren Umfangsenden hin leicht keilförmig auf die Antriebsscheibe zuläuft; die Mantelfläche der Abtriebsscheibe im Querschnitt polygonal ist; in den Taschen Paare keilförmiger Schubkolben angeordnet sind, die gegeneinander durch mindestens eine Druckfeder auseinandergehalten sind; die Schubkolben an ihren der Mantelfläche der Abtriebsscheibe zugewandten Seiten eben oder leicht gewölbt ausgebildet sind und in der Antriebsscheibe oder an den Schubkolben Druckfedern angeordnet sind, die auf die Abtriebsscheibe einwirken und bei Leerlauf lediglich ein Rückstellmoment von der Antriebs- auf die Abtriebsscheibe, aber so gut wie keine Reibungskraft ausüben.

Auf diese Schrift wird voll inhaltlich Bezug genommen, da die vorliegende Anmeldung eine Weiterentwicklung der Voranmeldung ist.

Dokument DE-C-39 01 467 zeigt die Merkmale des Oberbegriffs von Anspruch 1.

Der vorliegenden Erfindung liegt die Aufgabe zugrunde, einen mechanischen Torsionsschwingungsdämpfer zu entwickeln, der über den gesamten Lastbereich eine geeignete Dämpfung bewirkt.

Diese Aufgabe wird erfindungsgemäß durch einen mechanischen Torsionsschwingungsdämpfer mit den Merkmalen von Anspruch 1 gelöst.

In üblichen Lastzuständen wirkt lediglich das zwischen Primär- und Sekundärteil angeordnete Federungs- und Dämpfungssystem aus tangentialen Druckfedern und Schubkolben, das aus der DE 195 44 832 bekannt ist. Treten im System hingegen größere zu kompensierende Drehmomente und damit größere Drehwinkel zwischen Primär- und Sekundärteil auf, wird also ein vorbestimmter relativer Drehwinkel (freies Spiel) zwischen dem Primär- und dem Sekundärteil überschritten, wird die eingebrachte Energie durch die dann zu wirken beginnende zusätzliche Dämpfungseinrichtung durch Reibung in Wärme umgesetzt und so dem System entzogen, so dass es nicht zu einer Überhöhung gegenüber der Primärseite kommt. Durch diese Ausbildung wird anstelle von Coulomb'scher Reibung in der enthaltenen Fettfüllung eine für bestimmte Anwendungen sinnvolle geschwindigkeitsproportionale Scherreibung erzeugt.

Vorteilhafte Ausgestaltungen der Erfindung sind Gegenstand der Unteransprüche. Erfindungsgemäß weist das Dämpfungsmittel einen, in eine Nut des Primär- oder des Sekundärteils, vorzugsweise spielfrei eingesetzten Schleppring auf, der an seiner der Nut gegenüberliegenden Seite Mitnehmernocken aufweist, die in an dem Sekundär- oder dem Primärteil angebrachte Vertiefungen mit Freispiel eingreifen.

Die Reibarbeit wird, in radialer Richtung gesehen, an der Außen- und Innenfläche des Schleppreibringes und den daran anliegenden Seiten der Nut verrichtet. Diese Ausführungsform ist besonders kompakt und preiswert und lässt sich leicht in bestehende mechanische Torsionsschwingungsdämpfer integrieren.

Vorteilhaft ist es, wenn der Schleppreibring nach Art eines Wellendichtrings ein offenes Hohlprofil aufweist, in dem eine gewickelte Metallfeder, ein Gummiring oder dergleichen, aufgenommen ist. Als Gummiring wird insbesondere ein O-Ring vorgeschlagen. Die gewickelte Metallfeder, der Gummi-O-Ring oder dergleichen, wirken dabei als Mittel zum Vorspannen des Schleppreibringes in radialer Richtung. Durch diese Ausbildung ist es möglich, die Flächenpressung des Schleppreibringes an den Wandungen der Nut und damit die Dämpfungscharakteristik des Schleppreibringes durch Variieren der eingebrachten Elemente an den speziellen Anwendungsfall (Art, Leistung und Nennmoment des Motors) anzupassen.

Es ist jedoch auch möglich, mit dem Gummi-O-Ring eine axiale Kraft auf das Primär- oder das Sekundärteil zu übertragen.

Die bisher beschriebenen Ausführungsformen von Schleppreibringen weisen eine winkelunabhängige Reibung auf. In bestimmten Anwendungsfällen kann es aber sinnvoll sein, wenn der Schleppreibring und die diesen aufnehmende Nut in Umfangsrichtung eine ungleichförmige Breite aufweist.

Eine Ausführungsform der Erfindung sieht vor, dass der Schleppreibring mindestens zwei ineinandergreifende Teile mit dazwischen befindlicher Fettfüllung aufweist. Hierdurch gestaltet sich die Aufbewahrung des Fetts besonders einfach und man erhält verhältnismäßig große Wechselwirkungsflächen.

Ein vorteilhafter Aufbau ist dadurch zu erzielen, dass die Dämpfungseinrichtung einen in Umfangsrichtung unterbrochenen Spannring aufweist.

Um einen beim Verdrehen des Primärteils zum Schleppring definierten vorbestimmten Reibungsanstieg zu erzielen, wird vorgeschlagen, die Mitnehmernocken des Schleppreibrings und die Vertiefungen des Primärteils und/oder die Berührungsflächen des Schleppreibringes und des Sekundärteils mit Auflaufflächen, Rampen- oder Kurvenflächen auszubilden. Dadurch kann eine genau definierte von der Umfangskraft abhängige Reibung erzeugt werden, da die beiden zusammenwirkenden Flächenpaare bei zunehmendem relativem Drehwinkel in axialer Richtung aufeinander gepresst werden und so eine winkelabhängige Reibung erzeugen.

Vorteilhaft ist es weiterhin, wenn die den Schleppreibring aufnehmende Nut in axialer Richtung konisch ausgebildet ist. Insbesondere eine derartige konische Ausbildung in Verbindung mit den angesprochenen Rampen hat in der Praxis zu besonders guten Dämpfungsergebnissen geführt.

Im Hinblick auf die Anforderungen an den Schleppring hat sich Kunststoff als bevorzugtes Material herausgestellt.

Mehrere Ausführungsbeispiele sind in den Zeichnungen dargestellt und werden im folgendem näher beschrieben. Es zeigt,
- Figur 1: eine axiale Teilschnittansicht einer ersten Ausführungsform eines erfindungsgemäßen Schleppreibringes mit gewickelter Metallfeder,
- Figur 2: einen Querschnitt durch die in Figur 1 gezeigte erfindungsge- mäße Kupplung,
- Figur 3: eine Abwicklung des Schleppreibringes und des Primärteils aus Figur 1,
- Figur 4: eine Abwicklung eines alternativen Schleppreibrings und des Primärteils,
- Figur 5: eine axiale Teilschnittansicht einer zweiten Ausführungsform eines erfindungsgemäßen Schleppreibrings mit Gummi-O- Ring,
- Figur 6: eine axiale Teilschnittansicht einer dritten Ausführungsform eines erfindungsgemäßen Schleppreibrings mit Fettfüllung,
- Figur 7: eine Unteransicht einer vierten Ausführungsform eines erfin- dungsgemäßen Schleppreibrings mit winkelabhängiger Rei- bungserhöhung in radialer Richtung wirkend,
- Figur 8: eine Abwicklung des Schleppreibrings, eines Primärteils- und eines Sekundärteils mit winkelabhängiger Reibungserhöhung in axialer Richtung wirkend,
- Figur 9: einen Schleppreibring als in Umfangsrichtung unterbrochener Spannring und
- Figur 10: die Wirkungsweise des erfindungsgemäßen Torsions- schwingungsdämpfers mit Schleppreibring in schematischer, grafischer Darstellung als Kennlinienüberlagerung.

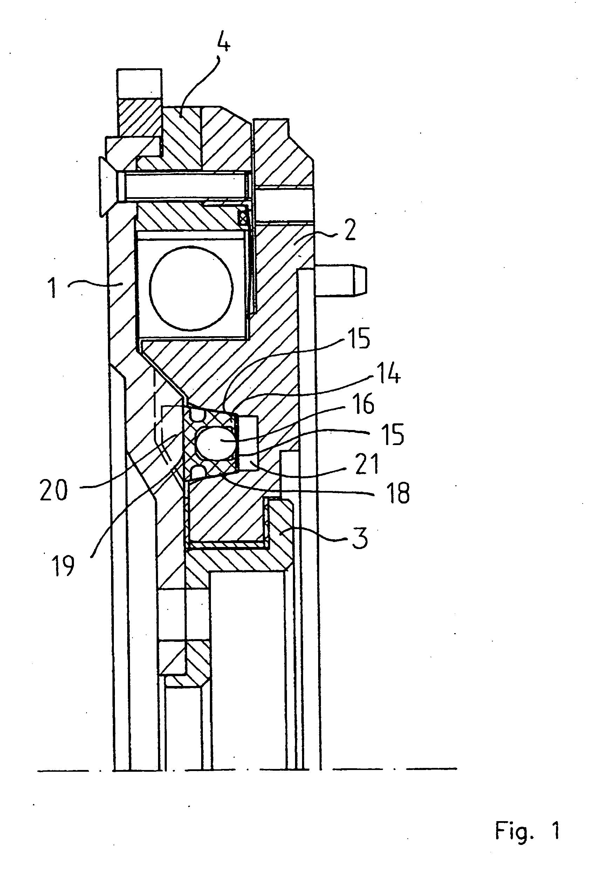

In der Figur 1 ist mit der Bezugsziffer 1 das Primärteil bezeichnet, das hier als Antriebsscheibe ausgebildet ist. Hierzu koaxial ist die Abtriebsscheibe oder das Sekundärteil 2 angeordnet. An der Rückseite der Abtriebsscheibe 2 greift ein nicht dargestellter Antriebsstrang mit weiteren Kupplungselementen einer Schaltkupplung oder dergleichen an.

Die Abtriebsscheibe 2 sitzt auf einer Zentriernabe 3, die ein axiales Z-förmiges Profil hat und mit der Antriebsscheibe 1 verbunden ist.

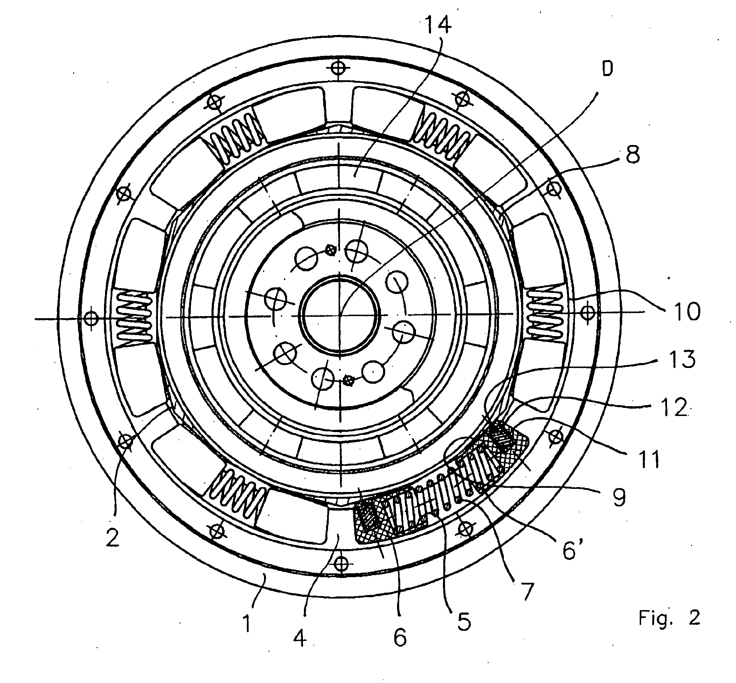

Wie Figur 2 zeigt, weist die Antriebsscheibe 1 einen ringförmigen Teil 4 auf, der einen vorderen Teil der Abtriebsscheibe 2 übergreift und an seiner Innenseite über den Umfang verteilte, radiale Taschen 5 aufweist, die zu beiden Enden hin, keilförmig verjüngt sind.

In jeder Tasche 5 ist ein Paar Schubkolben 6 angeordnet, die durch mindestens eine Druckfeder 7 auseinandergedrückt werden. Im Leerlauf liegen die Schubkolben 6 gegen die Enden der Tasche 5 an.

Die Mantelfläche 8 der Abtriebsscheibe 2 ist im Querschnitt polygonal ausgebildet. Dementsprechend ist die der Abtriebsscheibe 2 zugewandte Seite 9 der Schubkolben 6 eben oder leicht gewölbt ausgebildet.

Die Mantelfläche 10 jeder Tasche 5 bildet einen Teilzylinder, dessen Krümmungsachse annähernd mit der Drehachse der Kupplung übereinstimmt oder auf der radialen Mittelebene durch die Tasche 5 zwischen dieser und der Drehachse der Kupplung liegt. Die radiale Mittelebene enthält die Drehachse D und einen darauf senkrecht stehenden die Tasche schneidenden radialen Strahl.

In den Schubkolben 6 sind radiale Bohrungen 11 vorgesehen, in denen kleine Druckfedern 12 angeordnet sind, die mittels Übertragungskugeln 13, auf die Mantelfläche 8 der Abtriebsscheibe 2 drücken. Damit wird während des Leerlaufs ein Rückstellmoment von der Antriebs- auf die Abtriebsscheibe, aber so gut wie keine Reibungskraft ausgeübt.

Wenn die Antriebsscheibe 1 gedreht wird und ein Drehmoment auf den Abtriebsstrang überträgt, bewegt sie sich relativ zur Abtriebsscheibe 2 und bewegt dann jeweils einen der beiden in einer Tasche 5 befindlichen Schubkolben 6 gegen den anderen Schubkolben 6' und dabei wird auf die Antriebsscheibe 1 eine Reibungskraft ausgeübt, die zu einer Dämpfung der Drehschwingungen führt.

Wenn jedoch das zwischen Antriebsscheibe 1 und Abtriebsscheibe 2 entstehende Drehmoment zu groß wird, wie es zum Beispiel bei Durchlaufen der kritischen Drehzahl im Moment des Anlassens möglich ist, würde dieses Dämpfungssystem alleine nicht ausreichen und die Schubkolben 6 kämen nahe aneinander oder würden sogar aufeinanderschlagen. Dies hätte zum einen unangenehme Geräusche und zum ändern auf Dauer eine Zerstörung der Schubkolben 6 zur Folge.

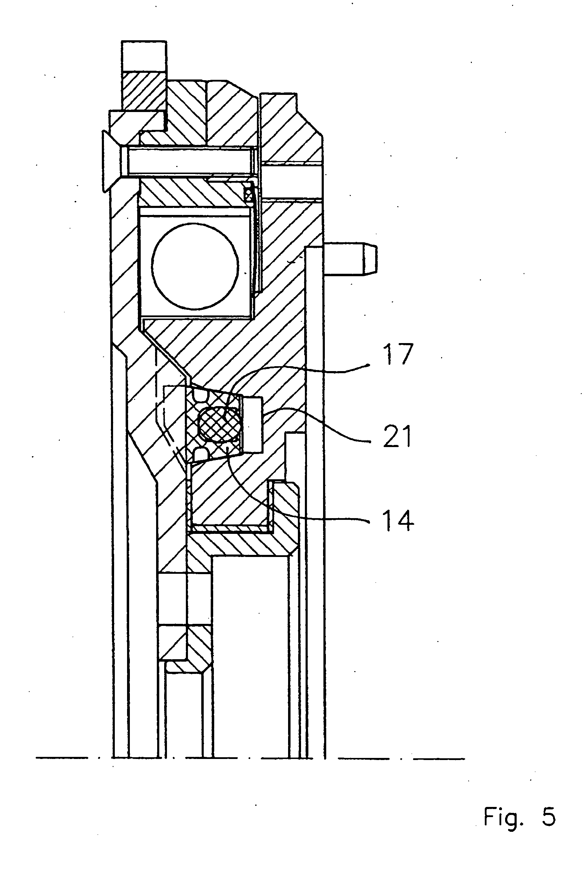

Für diesen Fall ist daher der nachstehend beschriebene, erfindungsgemäße Schleppreibring 14 vorgesehen. Der Schleppreibring 14 ist als ringförmiges Teil aus Kunststoff ausgebildet und weist ein offenes Hohlprofil auf, das in Figur 1 als U-Profil oder umlaufende Nut 15 dargestellt ist. In dieser Nut 15 befindet sich im Ausführungsbeispiel nach Figur 1 eine gewickelte Metallfeder 16 und im Ausführungsbeispiel nach Figur 5, ein Gummi-O-Ring 17. Dieses federnde Element 16 oder 17 dient dazu, auf die Flanken 18 des Schleppreibringes 14 eine definierte Spreizkraft auszuüben.

An der der offenen Seite der umlaufenden Nut 15 gegenüberliegenden Seite 19 weist der Schleppreibring 14 am Umfang verteilte Mitnehmernocken 20 auf. Der Schleppreibring 14 wird mit der offenen Seite der umlaufenden Nut 15 in eine ringförmige, in axialer Richtung im wesentlichen konisch ausgebildete Nut 21, spielfrei eingesetzt. Diese konische Nut 21 ist in der Abtriebsscheibe 2 ausgebildet und verjüngt sich in Richtung zur Öffnung der im Schleppreibring 14 ausgebildeten umlaufenden Nut 15.

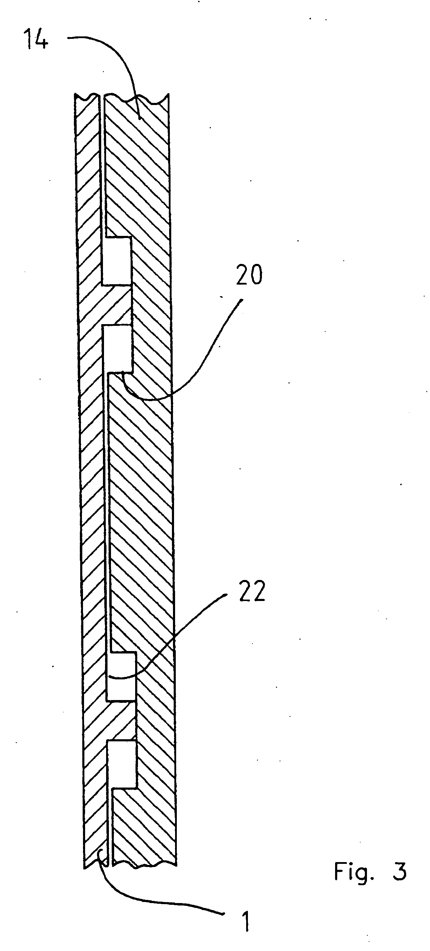

Wie in der Abwicklung in Figur 3 dargestellt, greifen die Mitnehmernocken 20 des Schleppreibrings 14 mit Umfangsspiel in Vertiefungen 22 der Antriebsscheibe 1 ein. Dieses Spiel ermöglicht es, dass das oben beschriebene Federungs- und Dämpfungssystem aus tangentialen Druckfedern 7 und Schubkolben 6 bei geringen Amplituden frei arbeiten kann. Es verbleibt nur ein geringes Restreibmoment, das durch die Kontaktkraft zwischen Primärteil 1 und Schleppreibring 13 verursacht wird.

Erst wenn die Amplituden zu groß werden, schlagen die Mitnehmernocken 20 an der einen oder anderen Seite der Vertiefungen 22 in der Antriebsscheibe 1 an, wodurch der Schleppreibring 14 unter Verrichtung von Reibarbeit in der Nut 21 verdreht wird. An dieser neuen Position kann, wenn weiterhin nur noch geringe Amplituden auftreten, wiederum das oben beschriebene Federungs- und Dämpfungssystem arbeiten.

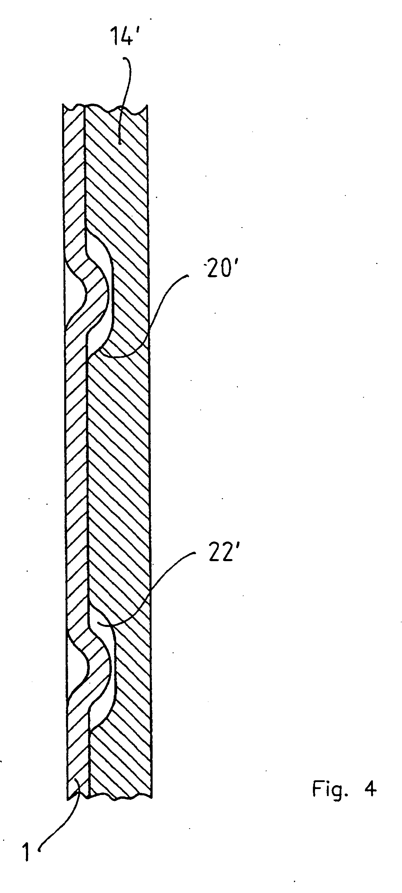

Bei der in Figur 4 gezeigten Alternative einer Abwicklung sind die Mitnehmernocken 20' und die Vertiefungen 22' im Schleppring 14' an ihren Kanten abgerundet. Diese Abrundung, die auch als. Rampe oder Kurvenlinie ausgebildet sein kann, dient dazu, im Bereich des Anschlages Primärteil 1 und Schleppreibring 14' axial auseinander zu drücken, um dadurch die entstehende Reibung zu erhöhen.

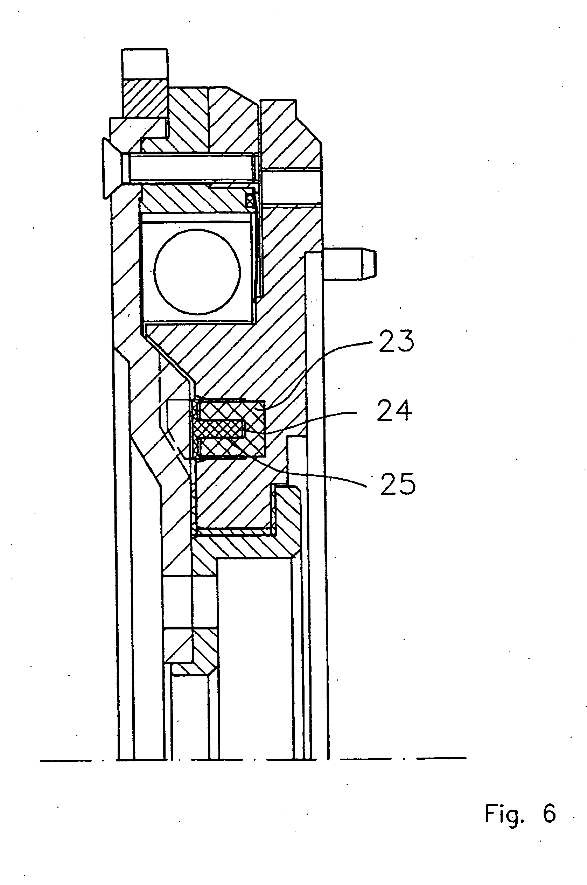

Die Figuren 5 und 6 zeigen weitere Ausführungsmöglichkeiten des Schleppreibringes, wobei in Figur 5 ein Gummi-O-Ring 17 dargestellt ist, um das zum Verdrehen des Schleppringes 14 in der Nut 21 erforderliche Drehmoment einzustellen und in Figur 6 ein zweiteilig ausgebildeter Schleppreibring 23, 24, bei dem zwischen dem ersten Teil 23 und dem zweiten Teil 24 eine Fettfüllung 25 eingebracht ist. Durch Relativbewegungen der Teile 23 und 24 des Schleppreibrings 23, 24 gegeneinander, entsteht keine Coulomb'sche Reibung, sondern eine geschwindigkeitsproportionale Scherreibung in der Fettfüllung 22.

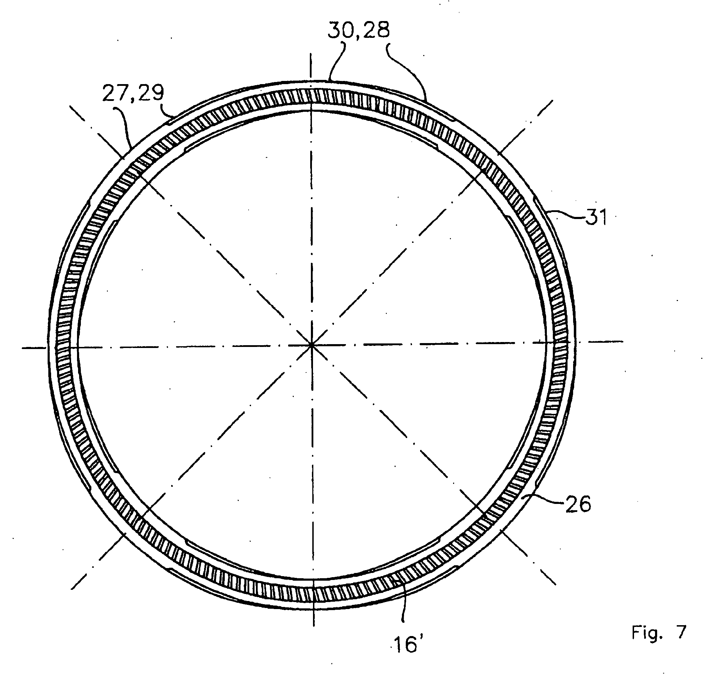

Figur 7 zeigt eine weitere Ausführungsform eines Schleppreibringes 26, hier mit gewickelter Metallfeder 16'. Der Schleppreibring 26 weist keinen umlaufend gleichen Innen- und Außendurchmesser auf, sondern mehrere relativ breite Bereiche 27 und mehrere relativ schmale Bereiche 28. Diese arbeiten mit entsprechend ausgearbeiteten Bereichen 29, 30 in der Nut 31 der Abtriebsscheibe 2 zusammen. Hierdurch wird erzielt, dass das ausgeübte Reibmoment winkelabhängig ist. Bewegt sich nämlich der breite Bereich 27 des Schleppreibringes 26 in den verengten Bereich 30 der Nut 31 hinein, wird das Reibmoment größer. Dies kann für bestimmte Anwendungsfälle von Vorteil sein.

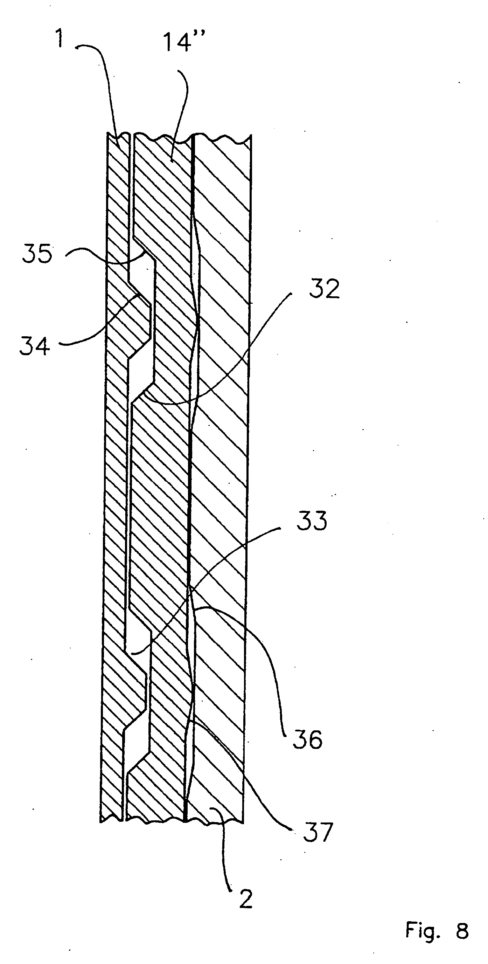

In Figur 8 ist eine Abwicklung eines Schleppreibringes 14" in Zusammenwirkung mit der Antriebsscheibe 1 und der Abtriebsscheibe 2 dargestellt, bei dem die Mitnehmernocken 32 des Schleppreibringes 14" und die Vertiefungen 33 in der Antriebsscheibe 1 in axialer Richtung als Rampen 34, 35 ausgebildet sind. Hierdurch wird bei entsprechend großem Drehmoment und daraus resultierendem Drehwinkel der Schleppreibring 14" in axialer Richtung auf die Antriebsscheibe 2 gepresst, an deren Berührungsfläche ebenfalls Rampen 36, 37 ausgebildet sind, die eine winkelabhängige Coulomb'sche Reibung erzeugen.

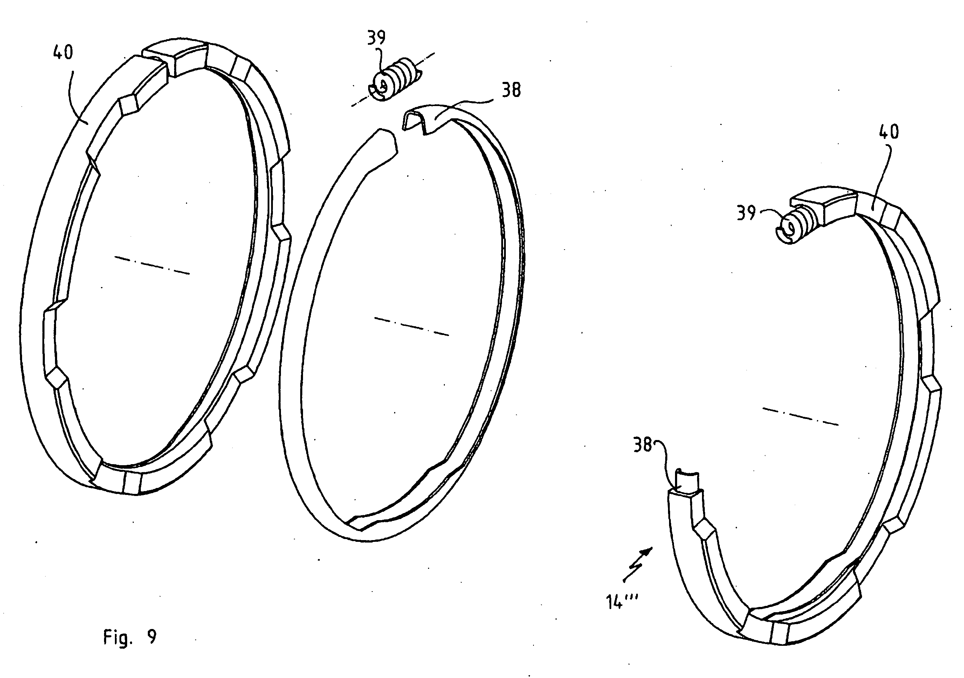

Figur 9 zeigt eine weitere Ausführungsform eines Schleppreibringes 14"'. Das federnde Element wird bei diesem Schleppreibring durch einen Blechring 38 gebildet, der von einer Druckfeder 39 auseinandergespreizt wird. Der Blechring 38 und die Druckfeder 39 liegen in einer Innennut eines Kunststoffring 40, der als Schleppreibring wirkt.

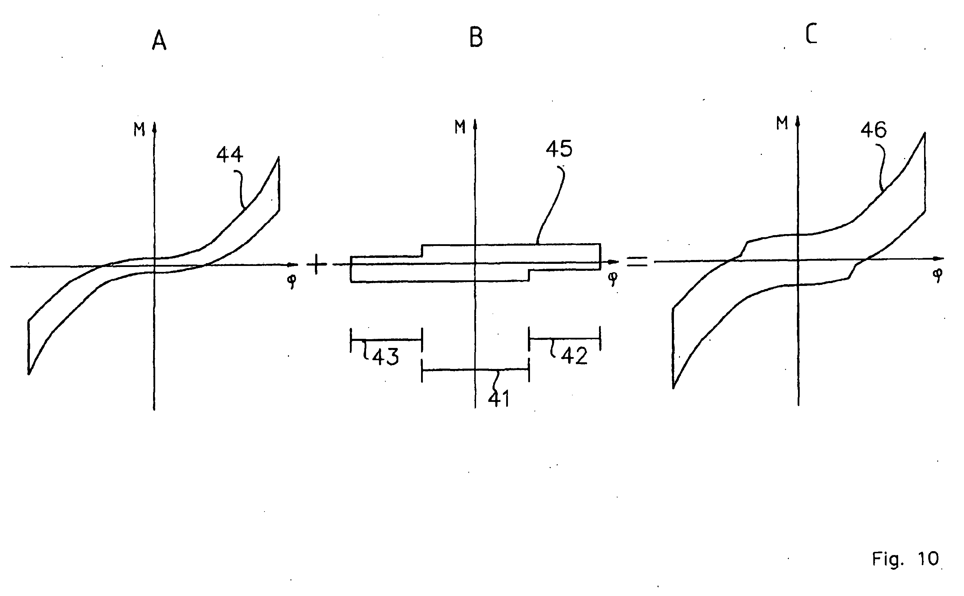

In Figur 10 ist die Wirkungsweise des erfindungsgemäßen Torsionsschwingungsdämpfers mit Schleppreibring anhand einer Kennlinienüberlagerung erläutert. Das Diagramm A zeigt die natürliche Winkeldrehmomentkennlinie eines herkömmlichen Federungs- und Dämpfungssystems. Diagramm B zeigt eine entsprechende Kennlinie des Schleppreibringes, bei der geringe Reibmomente innerhalb des Freiwinkels 41 und relativ hohe im Bereich der Mitnahme 42, 43 auftreten.

Die von den jeweiligen Schleifen 44, 45, 46 eingeschlossenen Flächen entsprechen den Dämpfungsenergien, die dem System beim Durchlauf großer Winkelamplituden entzogen werden. Diagramm C ist eine Überlagerung der Wirkungen nach Diagramm A und Diagramm B und zeigt den gegenüber dem Diagramm A deutlich erhöhten Dämpfungsanteil.

## Patentansprüche

1. Mechanischer Torsionsschwingungsdämpfer mit einem Primär- (1) und einem Sekundärteil (2), die über ein Federungs- und Dämpfungssystem verbunden sind und einer zwischen dem Primär- (1) und dem Sekundärteil (2) vorgesehenen zusätzlichen Dämpfungseinrichtung (23, 24), wobei die zusätzliche Dämpfungseinrichtung (23, 24) mindestens zwei ineinander greifende Teile (23, 24) mit dazwischen befindlicher Fettfüllung (25) aufweist,
***dadurch gekennzeichnet, dass*** die zusätzliche Dämpfungseinrichtung (23, 24)
einen in eine Nut (21) des Primärteils (1) oder des Sekundärteils (2) eingesetzten Schleppreibring (23, 24), der an seiner der Nut gegenüberliegenden Seite Mitnehmernoclcen (20) aufweist, die in an dem Sekundärteil (2) oder dem Primärteil (1) eingebrachte Vertiefungen (22, 22') mit Freispiel eingreifen, umfasst.

2. Mechanischer Torsionsschwingungsdämpfer nach Anspruch 1, ***dadurch gekennzeichnet, dass*** die zusätzliche Dämpfungseinrichtung (23,24) einen in eine Nut (21) des Primärteils (1) oder des Sekundärteils (2) spielfrei eingesetzten Schleppreibring (23, 24), der an seiner der Nut gegenüberliegenden Seite Mitnehmernocken (20) aufweist, die in an dem Sekundärteil (2) oder dem Primärteil (1) eingebrachte Vertiefungen (22, 22') mit Freispiel eingreifen, umfasst.

3. Mechanischer Torsionsschwingungsdämpfer nach Anspruch 2, ***dadurch gekennzeichnet, dass*** der Schleppreibring (23, 24) nach Art eines Wellendichtrings ein offenes Hohlprofil aufweist, in dem eine gewickelte Metallfeder (16), ein Gummi- O- Ring (17) oder dergleichen aufgenommen ist.

4. Mechanischer Torsionsschwingungsdämpfer nach Anspruch 2 oder *3, **dadurch gekennzeichnet, dass*** der Schleppreibring und die diesen aufnehmende Nut (31) in Umfangsrichtung eine ungleichförmige Breite aufweist.

5. Mechanischer Torsionsschwingungsdämpfer nach einem der vorhergehenden Ansprüche, ***dadurch gekennzeichnet, dass*** die zusätzliche Dämpfungseinrichtung (23, 24) radial wirkt.

6. Mechanischer Torsionsschwingungsdämpfer nach einem der vorhergehenden Ansprüche, ***dadurch gekennzeichnet, dass*** die zusätzliche Dämpfungseinrichtung (23, 24) ringförmig ist.

7. Mechanischer Torsionsschwingungsdämpfer nach einem der vorhergehenden Ansprüche, ***dadurch gekennzeichnet, dass*** die Dämpfungseinrichtung (23, 24) einen in Umfangsrichtung unterbrochenen Spannring (23, 24) aufweist.

8. Mechanischer Torsionsschwingungsdämpfer nach einem der vorhergehenden Ansprüche, ***dadurch gekennzeichnet, dass*** die Mitnehmernocken (32) des Schleppreibringes und Vertiefungen des Primärteils (1) und/oder Berührungsflächen des Schleppreibrings und des Sekundärteils (2) Autlaufflächenrampen (34, 35, 36, 37) oder Kurvenflächen aufweisen.

9. Mechanischer Torsionsschwingungsdämpfer nach einem der vorhergehenden Ansprüche, ***dadurch gekennzeichnet, dass*** der Schleppreibring aus Kunststoff hergestellt ist.

## Claims

1. A mechanical torsional vibration damper comprising a primary (1) and a secondary part (2), which are connected via a spring and damping system and an additional damping device (23, 24) provided between the primary (1) and second part (2), wherein the additional damping device (23, 24) comprises at least two intermeshing parts (23, 24) having a grease charge (25) located therebetween, **characterised in that** the additional damping device (23, 24) comprises a drag friction ring (23, 24) inserted in a slot (21) of the primary part (1) or the secondary part (2), which drag friction ring has, on its side opposite the slot, drive cams (20) which engage with clearance in indentations (22, 22') incorporated on the secondary part (2) or the primary part (1).

2. The mechanical torsional vibration damper according to claim 1, **characterised in that** the additional damping device (23, 24) comprises a drag friction ring (23, 24) inserted with clearance in a slot (21) of the primary part (1) or the secondary part (2), which drag friction ring has, on its side opposite the slot, drive cams (20) which engage with clearance in indentations (22, 22') incorporated on the secondary part (2) or the primary part (1).

3. The mechanical torsional vibration damper according to claim 2, **characterised in that** the drag friction ring (23, 24) has an open hollow profile in the manner of a shaft sealing ring, in which a coiled metal spring (16), a rubber 0-ring (17) or the like is received.

4. The mechanical torsional vibration damper according to claim 2 or 3, **characterised in that** the drag friction ring and the slot (31) receiving said ring have a nonuniform width in the circumferential direction.

5. The mechanical torsional vibration damper according to any one of the preceding claims, **characterised in that** the additional damping device (23, 24) acts radially.

6. The mechanical torsional vibration damper according to any one of the preceding claims, **characterised in that** the additional damping device (23, 24) is annular.

7. The mechanical torsional vibration damper according to any one of the preceding claims, **characterised in that** the damping device (23, 24) has a tension ring (23, 24) interrupted in the circumferential direction.

8. The mechanical torsional vibration damper according to any one of the preceding claims, **characterised in that** the drive cam (32) of the drag friction ring and indentations of the primary part (1) and/or contact surfaces of the drag friction ring and the secondary part (2) have run-up surface ramps (34, 35, 36, 37) or curved surfaces.

9. The mechanical torsional vibration damper according to any one of the preceding claims, **characterised in that** the drag friction ring is made of plastic.

## Revendications

1. Amortisseur mécanique de vibrations de torsion comprenant une partie primaire (1) et une partie secondaire (2), lesquelles sont reliées par un système de suspension et d'amortissement, et un dispositif d'amortissement (23, 24) supplémentaire prévu entre la partie primaire (1) et la partie secondaire (2), le dispositif d'amortissement (23, 24) supplémentaire présentant au moins deux parties (23, 24) s'engrenant l'une dans l'autre avec un remplissage de graisse (25) intercalé, **caractérisé en ce que** le dispositif d'amortissement supplémentaire (23, 24) comprend une bague de friction traînante (23, 24) insérée dans une rainure (21) de la partie primaire (1) ou de la partie secondaire (2), laquelle bague présente sur son côté opposé à la rainure des cames d'entraînement (20), lesquelles s'engagent avec du jeu libre dans des cavités (22, 22') introduites sur la partie secondaire (2) ou la partie primaire (1).

2. Amortisseur mécanique de vibrations de torsion selon la revendication 1, **caractérisé en ce que** le dispositif d'amortissement (23, 24) supplémentaire comprend une bague de friction traînante (23, 24) insérée sans jeu dans une rainure (21) de la partie primaire (1) ou de la partie secondaire (2), laquelle bague présente sur son côté opposé à la rainure des cames d'entraînement (20), qui s'engagent avec du jeu libre dans des cavités (22, 22') introduites sur la partie secondaire (2) ou la partie primaire (1).

3. Amortisseur mécanique de vibrations de torsion selon la revendication 2, **caractérisé en ce que** la bague de friction traînante (23, 24) présente à la façon d'une bague d'étanchéité ondulée un profil creux ouvert, dans lequel est réceptionné un ressort métallique (16) enroulé, un joint torique en caoutchouc (17) ou similaire.

4. Amortisseur mécanique de vibrations de torsion selon la revendication 2 ou 3, **caractérisé en ce que** la bague de friction traînante et la rainure (31) recevant cette bague présentent une largeur irrégulière dans le sens périphérique.

5. Amortisseur mécanique de vibrations de torsion selon l'une quelconque des revendications précédentes, **caractérisé en ce que** le dispositif d'amortissement (23, 24) supplémentaire agit de façon radiale.

6. Amortisseur mécanique de vibrations de torsion selon l'une quelconque des revendications précédentes, **caractérisé en ce que** le dispositif d'amortissement (23, 24) supplémentaire est en forme de bague.

7. Amortisseur mécanique de vibrations de torsion selon l'une quelconque des revendications précédentes, **caractérisé en ce que** le dispositif d'amortissement (23, 24) présente une bague de serrage (23, 24) interrompue dans le sens périphérique.

8. Amortisseur mécanique de vibrations de torsion selon l'une quelconque des revendications précédentes, **caractérisé en ce que** les cames d'entraînement (32) de la bague de friction traînante et des cavités de la partie primaire (1) et/ou des surfaces de contact de la bague de friction traînante et de la partie secondaire (2) présentent des rampes de surface d'entrée (34, 35, 36, 37) ou des surfaces de came.

9. Amortisseur mécanique de vibrations de torsion selon l'une quelconque des revendications précédentes, **caractérisé en ce que** la bague de friction traînante est fabriquée à base de matière synthétique.
